# EUROPÄISCHE PATENTSCHRIFT

(11) **EP 0 904 968 B1**
(45) Veröffentlichungstag und Bekanntmachung des Hinweises auf die Patenterteilung: **17.09.2003**
(21) Anmeldenummer: 98114392.8
(22) Anmeldetag: 31.07.1998
(51) Int. Cl.: B60J 7/185

(54) **Cabriolet-Fahrzeug**
Convertible vehicle
Véhicule convertible

(30) Priorität: 27.09.1997 DE 29717325 U
(43) Veröffentlichungstag der Anmeldung: 31.03.1999
(73) Patentinhaber: Wilhelm Karmann GmbH, D-49084 Osnabrück (DE)
(72) Erfinder: Baumeier, Andreas, 49191 Belm (DE); Eitermann, Melanie, 42285 Wuppertal (DE)
(74) Vertreter: Busse & Busse Patentanwälte

(56) Entgegenhaltungen:
- DE-B- 1 111 960
- FR-A- 2 034 714
- GB-A- 1 179 411
- US-A- 5 042 869

## Beschreibung

Die Erfindung bezieht sich auf ein Cabriolet-Fahrzeug mit einem an einem Windschutzscheibenrahmen sicherbaren Verdeck, wobei zur Betätigung der Sicherung und Entsicherung des Verdecks zumindest ein beweglicher Handgriff vorgesehen ist.

Bei Cabriolet-Fahrzeugen dieser Art ist beispielsweise ein zentraler Handgriff vorgesehen, der mittels beispielsweise einer Schwenkbewegung um eine vertikale oder horizontale Achse Verschlußglieder des Verdecks in oder außer Eingriff mit entsprechenden Gegenstüchen des Windschutzscheibenrahmens bewegt. Um eine gute Bedienbarkeit zu gewährleisten und eine hinreichende mechanische Kraft übertragen zu können, sind derartige Handgriffe relativ groß ausgebildet und können zur Betätigung mit der ganzen Hand umgriffen werden. Während der Nichtbenutzung ist ein derartiger Handgriff häufig optisch störend und engt den Raum nahe dem Windschutzscheibenrahmen ein. Zudem bildet er eine Kopfaufschlaggefahr bei einem entsprechenden Unfall und ist nicht gegen Fehlbedienung während der Fahrt gesichert.

Aus der US 5,042,869 A ist ein Cabriolet-Fahrzeug der vorstehend genannten Art bekannt mit einem Handgriff, der in seiner Ruhestellung derart zu verschwenken ist, daß er in einer Dachausnehmung liegt. Auch dieser Handgriff ist so ausgebildet, daß er auch in seiner Ruhestellung mit der Hand umgriffen werden kann.

Der Erfindung liegt das Problem zugrunde, ein Cabriolet-Fahrzeug der eingangs genannten Art dahingehend zu verbessern, daß die genannten Nachteile beseitigt werden.

Die Erfindung löst dieses Problem mit den Merkmalen des Anspruches 1. Hinsichtlich weiterer vorteilhafter Ausgestaltungen wird auf die Ansprüche 2 bis 9 verwiesen.

Durch die Überführung des Handgriffs aus seiner Betätigungsstellung in eine vertikal aufwärts gelegene Ruhestellung ist der Handgriff in einen optisch nicht störenden, die Kopffreiheit nicht einschränkenden Bereich verbringbar.

Wenn der Handgriff in Ruhestellung in einer Ausnehmung zwischen Verkleidungsteilen eingesenkt ist, kann in Ruhestellung ein bündiger Abschluß des Handgriffs mit den Verkleidungsteilen erreicht werden.

Weitere Vorteile und Merkmale ergeben sich aus der nachfolgenden Beschreibung eines in der Zeichnung veranschaulichten Ausführungsbeispiels des Gegenstandes der Erfindung. In der Zeichnung zeigt:
- Fig. 1: einen Querschnitt durch einen erfindungsgemäßen Handgriff in Betätigungsstellung,
- Fig. 2: eine ähnliche Ansicht wie Fig. 1 in Ruhestellung des Handgriffs,
- Fig. 3: mit Kulissenführungen versehene Führungsteile für die Hubbewegung in teilweise querschnittlicher Ansicht bei ausgefahrenem Handgriff,
- Fig. 4: eine ähnliche Ansicht wie Fig. 3 bei in Ruhestellung befindlichem Handgriff,
- Fig. 5: eine ähnliche Ansicht wie Fig. 4 bei vertikal aufwärts gerichteter Krafteinleitung auf den zuvor in Ruhestellung befindlichen Handgriff,

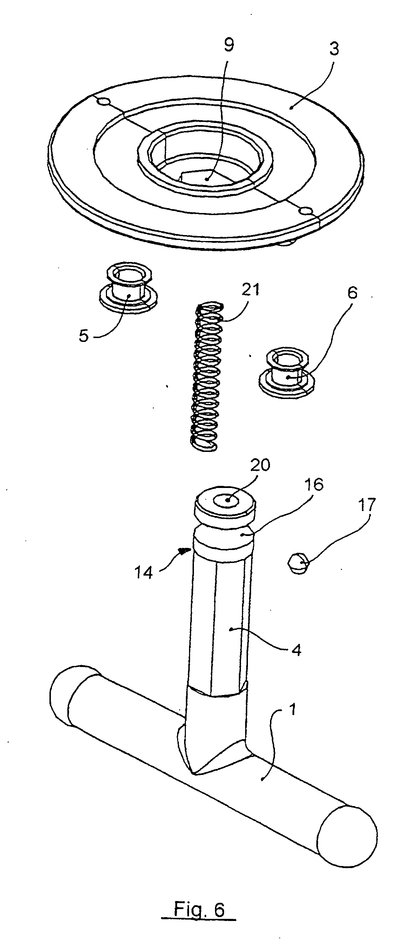

- Fig. 6: eine Exploslonsdarstellung des Handgriffes und einer auf diesem gelagerten Mitnehmerscheibe zur Betätigung der Verschlußvorrichtung,

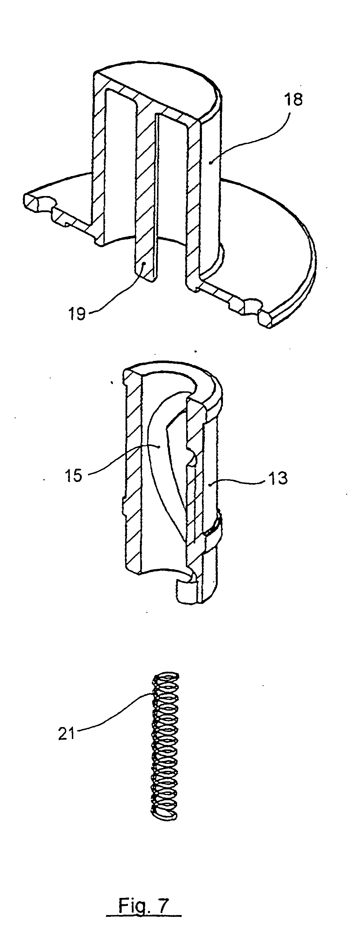

- Fig. 7: eine Explosionsdarstellung der Lagerung des Handgriffs und der eine Führungskulisse aufweisenden Hülse.

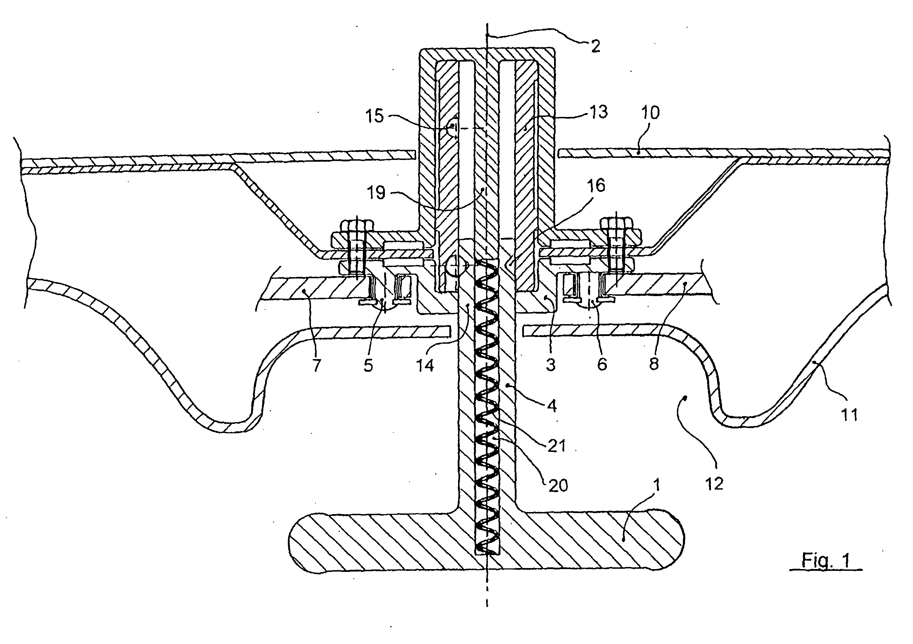

Der in Fig. 1 in Betätigungsstellung gezeigte Handgriff 1 ist um eine vertikale Achse 2 verschwenkbar, wobei durch diese Schwenkbewegung die Mitnehmerscheibe 3, die auf dem Schaft 4 des Handgriffs 1 formschlüssig gehalten ist, mit diesem verschwenkt wird. Dadurch gelangen Lagerungszapfen 5 und 6, auf denen ein Zug-Schub-Gestänge 7,8 gelagert ist, ebenfalls in eine Schwenkbewegung und sorgen so für eine ein- oder auswärts gerichtete Zug- oder Schubbewegung des Gestänges 7,8 entlang der Fahrzeugquerachse. Dadurch können beispielsweise randseitig an dem Windschutzscheibenrahmen befestigte Verschlußvorrichtungen in oder außer Eingriff mit entsprechenden Gegenstücken des Windschutzscheibenrahmens geführt werden.

Die formschlüssige Verbindung zwischen dem Schaft 4 des Handgriffes 1 und der Mitnehmerscheibe 3 kann beispielsweise dadurch erreicht werden, daß der Schaft 4 einen Außensechskant und die Mitnehmerscheibe 3 eine zentrale Bohrung 9 mit einem entsprechenden Innensechskant aufweist. Auch andere formschlüssige Verbindungen sind hier selbstverständlich möglich.

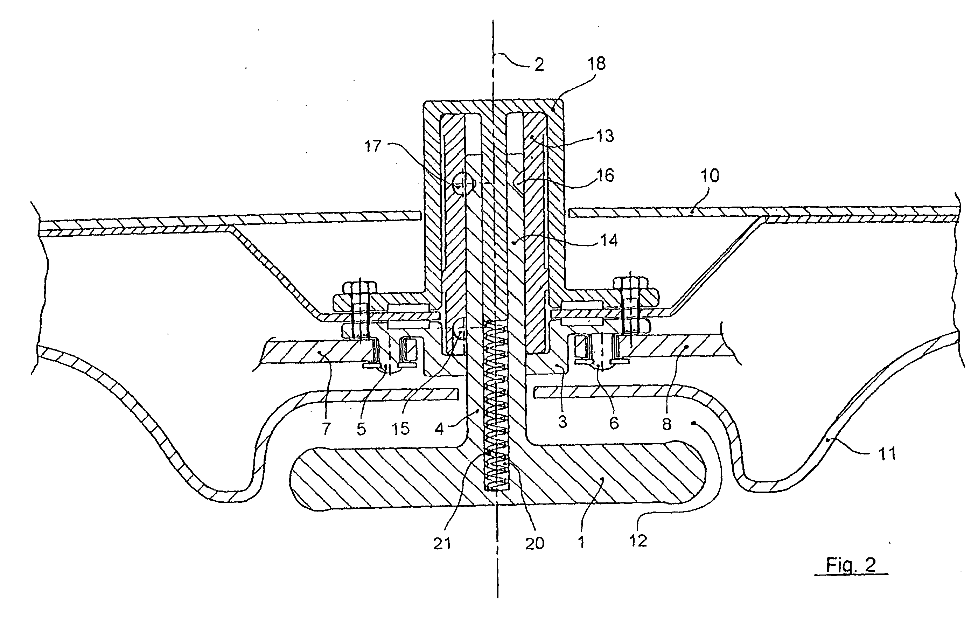

Der Handgriff 1 ist in der vorderen Dachspitze 10 des Cabriolet-Verdeckes angeordnet, wobei dieser Dachbereich 10 unterseitig von Verkleidungsteilen 11 abgeschlossen ist, die im Bereich des Handgriffes 1 eine Ausnehmung 12 belassen. In diese Ausnehmung 12 ist der Handgriff 1 in Ruhestellung eingesenkt, wobei die Überführung zwischen Betätigungsstellung (Fig. 1) und Ruhestellung (Fig. 2) eine vertikal aufwärts gerichtete Druckbewegung darstellt.

Zur Führung dieser Hubbewegung des Handgriffs 1 dienen Führungsteile 13 und 14, wobei das Führungsteil 13 eine Hülse ausbildet und das Führungsteil 14 ein in dieser Hülse verfahrbares zylindrisches Hubteil. Das Führungsteil 14 ist dabei vom oberen Bereich des Schafts 4 des Handgriffs 1 gebildet.

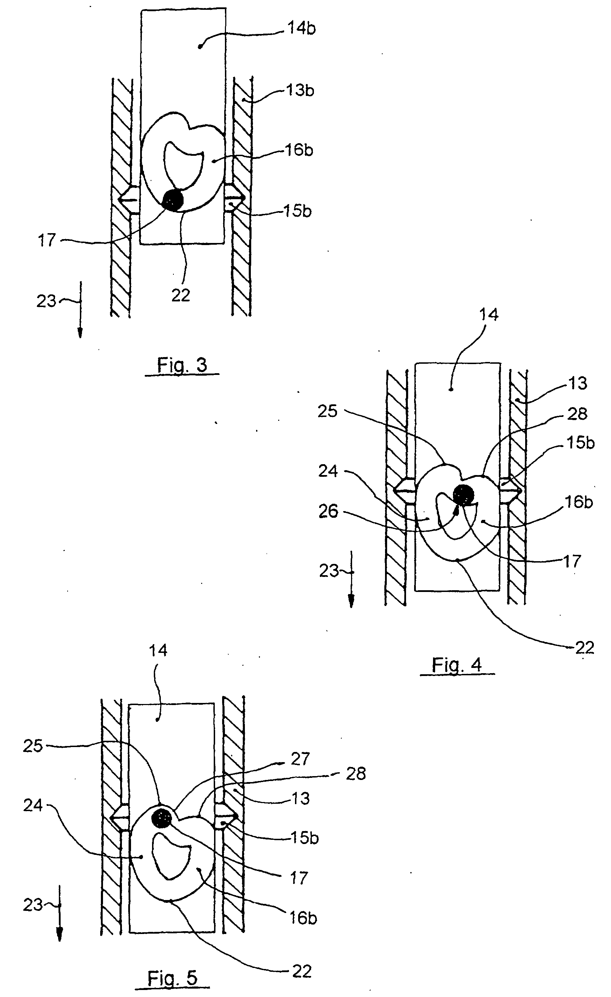

Sowohl das Hubteil 14 als auch die Hülse 13 sind jeweils mit einer Führungskulisse 15 bzw. 16 versehen, wobei gemäß den Figuren 1 und 2 des dargestellten Ausführungsbeispiels die Führungskulisse 15 der Hülse 13 eine mit vertikal verlaufenden Anteilen versehene herzförmige Kulisse ausbildet - andere Kulissenformen sind selbstverständlich möglich - und die Führungskulisse 16 des Hubteils 14 eine umlaufende Ringkulisse ausbildet. In der Darstellung gemäß den Figuren 3 bis 5 sind die Verhältnisse umgekehrt.

In den Kulissenführungen 15,16 ist ein Führungskörper 17 geführt, der beispielsweise als Kugel - auch als Keil oder Rolle - ausgebildet sein kann und dessen Bewegungsraum auf den Bereich beschränkt ist, in dem die Kulissenführungen 15 der Hülse 13 und 16 des Hubteils 14 einander gegenüber gelegen sind.

Die Hülse 13 ist von einem becherförmigen Aufnahmeteil 18 gehalten, das ortsfest an dem vorderen Dachteil 10 angeordnet ist und die Hülse 13 umfaßt. Sowohl die Hülse 13 als auch das sie umgebende Aufnahmeteil 18 können statt der einteiligen Ausbildung auch beispielsweise jeweils aus zwei Halbschalen ausgebildet sein.

Das Aufnahmeteil 18 weist einen zentralen, vertikal abwärts weisenden Steg 19 auf, der im montierten Zustand der Teile in eine zentrale, im Schaft 4 des Handgriffs 1 angeordnete Bohrung 20 eingreift. Dadurch ist der Schaft 4, der auch das Hubteil 14 umfaßt, sowohl von außen durch die Hülse 13 als auch über die Bohrung 20 von innen durch den Steg 19 vertikal geführt, um somit ein Verkanten des Handgriffes 1 bei der vertikalen Auf- und Abwärtsbewegung effektiv zu verhindern. Zwischen der Unterkante des Stegs 19 und dem Ende der Sackbohrung 20 ist zudem ein Federelement, hier eine Schraubenfeder 21, angeordnet, die in Ruhestellung gespannt ist und daher eine abwärts, in Richtung der Betätigungsstellung wirkende Kraft auf den Handgriff 1 ausübt.

Die Figuren 3 bis 5 zeigen eine Alternativausbildung, bei der das Hubteil 14b ortsfest ist und die Hülse 13b gegenüber dem Hubteil 14b vertikal verfahrbar ist, wobei die Hülse 13b mit dem Handgriff 1 verbunden ist. Die Federbelastung wirkt sich daher dergestalt aus, daß die Hülse 13b in den Figuren 3 bis 5 vertikal nach unten in Richtung des Pfeils 23 vorgespannt ist, der daran anschließende Handgriff 1 folglich in Richtung seiner Betätigungsstellung gedrückt wird.

In der Fig. 3 befindet sich der Handgriff 1 in Betätigungsstellung, der bewegliche Führungskörper 17, der sowohl in der ringförmigen Kulisse 15b der Hülse 13b als auch in einer herzförmigen Kulisse 16b des zylindrischen Hubteils 14b gehalten ist, befindet sich dabei in einer Gleichgewichtslage 22. Dabei wirkt einerseits die Federkraft 23 vertikal abwärts über die Ringkulisse 15b auf die Kugel 17 ein, andererseits sorgt die untere Krümmung 22 der herzförmigen Kulisse 16b des Hubteils 14b für eine Zwangsführung, so daß die Kugel 17 nicht weiter abwärts gelangen kann und der Handgriff 1 somit nicht über die in Figur 3 gezeigte Stellung nach unten hinaus gelangen kann.

Bei Eindrücken des Handgriffes 1 und der daran befestigten Hülse 13b in vertikal aufwärts gerichteter Bewegung gegen die Kraft der Feder 23 gelangt die Kugel 17 über den vertikalen Abschnitt 24 der Kulisse 16b bis zu einer oberen Anschlagkrümmung 25, die eine weitere Aufwärtsbewegung der Hülse 13 und der darin über die Führungskulisse 15b gehaltenen Kugel 17 verhindert. Bei Lösen der von Hand ausgeübten vertikal aufwärts gerichteten Druckbewegung fällt dann die Kugel 17 in die Gleichgewichtslage 26, da dann die Federkraft 23 wieder bestimmend auf die Hülse 13 und die Führungskulisse 15b einwirkt, so daß die darin aufgenommene Kugel 17 wieder im Sinne einer vertikalen Abwärtsbewegung mit Kraft beaufschlagt wird. Diese Abwärtsbewegung wird durch die Anschlagkrümmung 26 der herzförmigen Kulisse 16b unterbunden, so daß auch hier eine stabile Gleichgewichtslage der Kugel 17 ausgebildet ist und daher sowohl die ausgefahrene Stellung gemäß Fig. 3 als auch die eingefahrene Stellung des Handgriffes 1 gemäß Fig. 4 durch eine Gleichgewichtslage der Kugel 17 in der Herzkulisse 16b bestimmt ist.

Um aus der Ruhestellung des Handgriffes 1 gemäß Fig. 4 wieder in die Betätigungsstellung zu gelangen, wird zunächst wiederum eine vertikal aufwärts gerichtete Druckkraft auf den Handgriff 1 ausgeübt, so daß die Kugel 17 in der Herzkulisse 16b von der im wesentlichen vertikal über der Gleichgewichtslage 26 befindlichen Krümmung 27 in die Anschlagkrümmung 28 geleitet wird, aus der sie dann bei Lösen des vertikal aufwärts gerichteten Druckes durch die Federkraft 23 abwärts in die Gleichgewichtslage 22 gleitet; so daß dann die ausgezogene Betätigungsstellung des Handgriffes 1 gemäß Fig. 3 wieder hergestellt ist. Zur Lösung des Handgriffes 1 aus seiner Ruhestellung ist daher lediglich ein vertikal aufwärts gerichteter Druck auszuführen, der Handgriff 1 muß hierbei nicht umgriffen und gezogen werden. Daher kann der Handgriff 1 vollständig in Verkleidungsteile 11 abgesenkt sein, ohne daß zwischen dem Handgriff 1 und den Verkleidungsteilen 11 noch ein Griffspalt verbleiben muß.

Da der Führungskörper 17 jeweils in Ruhe- bzw. Betätigungsstellung in einer Gleichgewichtslage befindlich ist, ist eine Fehlbedienung ausgeschlossen, eine stabile Zwischenstellung des Handgriffes 1 zwischen der Ruhe- und Betätigungsstellung ist aufgrund der Federbelastung nicht möglich.

Durch die Ausbildung der beiden Führungskulissen 15,16 bzw. 15b,16b sind Rastansätze oder ähnliche mechanische Teile, die einer Bruchgefahr unterliegen, verzichtbar. Sowohl die Überführung des Handgriffes 1 aus der Betätigungsstellung in die Ruhestellung als auch die umgekehrte Überführung in die Betätigungsstellung sind in gleicher Weise für den Benutzer durch einen vertikal aufwärts gerichteten Druck auf den Handgriff 1 durchzuführen, so daß dieser einfachste Bedienungsverhältnisse vorfindet.

## Patentansprüche

1. Cabriolet-Fahrzeug mit einem an einem Windschutzscheibenrahmen sicherbaren Verdeck, wobei zur Sicherung und Entsicherung des Verdecks zumindest ein beweglicher Handgriff (1) vorgesehen ist, **dadurch gekennzeichnet, daß** der Handgriff (1) aus einer Betätigungsstellung zum sichern oder Entsichern des Verdecks translatorisch durch eine im wesentlichen vertikal aufwärts gerichtete Bewegung in eine Ruhestellung überführbar ist.

2. Cabriolet-Fahrzeug nach Anspruch 1, **dadurch gekennzeichnet, daß** der Handgriff (1) in Ruhestellung in eine zwischen Verkleidungsteilen (11) ausgebildete Ausnehmung (12) eingesenkt ist.

3. Cabriolet-Fahrzeug nach Anspruch 2, **dadurch gekennzeichnet, daß** als Führungsteile für die translatorische Bewegung des Handgriffes (1) zwischen der Betätigungsstellung und der Ruhestellung des Handgriffs (1) eine Hülse (13;13b) und ein in dieser Hülse befindliches zylindrisches Hubteil (14;14b) vorgesehen sind, wobei die Hülse (13;13b) und das Hubteil (14;14b) den Verkleidungsteilen (11) bzw. den Betätigungsgriff (1) zugeordnet und gegeneinander verfahrbar sind.

4. Cabriolet-Fahrzeug nach Anspruch 3, **dadurch gekennzeichnet, daß** die Hülse (13;13b) und das Hubteil (14;14b) jeweils mit einer Kulissenführung (15, 16; 15b, 16b) versehen sind, in denen zumindest ein beweglicher Führungskörper (17) geführt ist, wobei die Kulissenführung (15; 15b) der Hülse (13; 13b) und des Hubteils (14;14b) mit Bezug auf einander ausgebildet sind und der bewegliche Führungskörper (17) in beiden Kulissen (15, 16; 15b; 16b) aufgenommen ist.

5. Cabriolet-Fahrzeug nach Anspruch 4, **dadurch gekennzeichnet, daß** der bewegliche Führungskörper (17) eine Kugel ist.

6. Cabriolet-Fahrzeug nach einem der Ansprüche 4 oder 5, **dadurch gekennzeichnet, daß** an einem der Führungsteile (13,14;13b,14b) als Führungskulisse (16;15b) eine umlaufende Ringkulisse und an dem anderen der Führungsteile (13,14;13b,14b) eine mit vertikalen Anteilen versehene Hubkulisse als Führungskulisse (15;16b) ausgebildet sind.

7. Cabriolet-Fahrzeug nach Anspruch 6, **dadurch gekennzeichnet, daß** die. Hubkulisse zumindest bereichsweise herzförmig ist und zwei Gleichgewichtslagen (22;26) des beweglichen Führungskörpers (17) ausbildet.

8. Cabriolet-Fahrzeug nach einem der Ansprüche 3 bis 7, **dadurch gekennzeichnet, daß** die Führungsteile (13, 14; 13b, 14b) gegeneinander federbelastet sind und dadurch der Handgriff (11) eine Krafteinwirkung in Richtung seiner Betätigungsstellung erhält.

9. Cabriolet-Fahrzeug nach einem der Ansprüche 1 bis 8, **dadurch gekennzeichnet, daß** der Handgriff (1) in seiner Ruhestellung durch eine vertikal aufwärts gerichtete Druckbewegung aus der Ruhestellung in die Betätigungsstellung überführbar ist.

## Claims

1. Convertible vehicle with a convertible top that can be secured to a windshield frame, with at least one moveable handle (1) being provided for locking and unlocking the top, **characterised in that** the handle (1) can be moved from an actuating position by an essentially vertical upwards movement to an at-rest position to lock or unlock the convertible top by a translational motion.

2. Convertible vehicle in accordance with claim 1, **characterised in that** the handle (1) in the at-rest position is recessed into a recess (12) formed between trim parts (11).

3. Convertible vehicle in accordance with claim 2, **characterised in that** as guide parts for the translational motion of the handle (1) a sleeve (13; 13b), and within this sleeve a cylindrical lift part (14; 14b), are provided between the actuating position and the at-rest position of the handle (1), with the sleeve (13; 13b) and the lift part (14; 14b) being assigned to the trim parts (11) and actuating handle (1) respectively and moveable relative to each other.

4. Convertible vehicle in accordance with claim 3, **characterised in that** the sleeve (13; 13b) and the lift part (14; 14b) are each provided with a detent guide (15, 16; 15b, 16b) in which at least one moveable guide body is inserted, with the detent guide (15; 15b) of the sleeve (13; 13b) and of the lift part (14; 14b) being designed to match each other and the moveable guide body (17) being accepted in both detents (15, 16; 15b, 16b).

5. Convertible vehicle in accordance with claim 4, **characterised in that** the moveable guide body (17) is a sphere.

6. Convertible vehicle in accordance with one of claims 4 or 5, **characterised in that** a rotating annular detent is formed at one of the guide parts (13, 14; 13b, 14b) as a guide detent (16; 15b) and at the other guide parts (13, 14; 13b, 14b) a lift detent with vertical parts is provided as a guide detent (15; 16b).

7. Convertible vehicle in accordance with claim 6, **characterised in that** the lift detent is heart shaped in at least some parts and forms two equilibrium positions (22; 26) of the moving guide body (17).

8. Convertible vehicle in accordance with one of claims 3 to 7, **characterised in that** the guide parts (13, 14; 13b, 14b) are spring-loaded against each other and a force acting in the direction of its actuating position is thus exerted on the handle (11).

9. Convertible vehicle in accordance with one of claims 1 to 8, **characterised in that** the handle (1) in its at-rest position can be moved from the at-rest position to the actuating position by a vertical upwards pushing motion.

## Revendications

1. Véhicule convertible, équipé d'une capote pouvant être fixée sur un cadre de pare-brise, avec au moins une poignée (1) mobile afin de mettre et enlever la capote,
**caractérisé en ce que**
la poignée (1) peut passer en translation d'une position d'actionnement permettant de mettre ou enlever la capote à une position de repos grâce à un déplacement vertical essentiellement dirigé vers le haut.

2. Véhicule convertible selon la revendication 1,
**caractérisé en ce que**
la poignée (1) en position de repos est enclavée dans un creux (12) formé entre les pièces de revêtement (11).

3. Véhicule convertible selon la revendication 2,
**caractérisé en ce que**
comme pièces de guidage pour le déplacement en translation de la poignée (1) entre la position d'actionnement et la position de repos de la poignée (1), un manchon (13, 13b) et une pièce de levée cylindrique placée dans ce manchon (14, 14b), sont associés aux pièces de revêtement (11) ou à la poignée d'actionnement (1) et peuvent se déplacer l'un par rapport à l'autre.

4. Véhicule convertible selon la revendication 3,
**caractérisé en ce que**
le manchon (13, 13b) et la pièce de levée (14, 14b) sont équipés chacun d'un guide à coulisse (15, 16, 15b, 16b), dans lequel au moins un corps de guidage (17) est mobile, le guide à coulisse (15, 15b) du manchon (13, 13b) et celui de la pièce de levée (14, 14b) étant adaptés l'un sur l'autre et le corps de guidage (17) étant mobile dans les deux coulisses (15, 16, 15b, 16b).

5. Véhicule convertible selon la revendication 4,
**caractérisé en ce que**
le corps de guidage (17) mobile est une bille.

6. Véhicule convertible selon l'une des revendications 4 ou 5,
**caractérisé en ce que**
sur une des pièces de guidage (13, 14, 13b, 14b), une coulisse circulaire sert de guide à coulisse (16, 15b) et, sur l'autre des pièces de guidage (13, 14, 13b, 14b), une coulisse de levée équipée de parties verticales sert de guide à coulisse (15, 16b).

7. Véhicule convertible selon la revendication 6,
**caractérisé en ce que**
la coulisse de levée est de forme cardioïde au moins par zone et forme deux positions d'équilibre (22, 26) pour le corps de guidage mobile (17).

8. Véhicule convertible selon l'une des revendications 3 à 7,
**caractérisé en ce que**
les pièces de guidage (13, 14, 13b, 14b) sont commandées par ressort l'une par rapport à l'autre et ainsi la poignée (11) conserve une action de force dans la direction de sa position d'actionnement.

9. Véhicule convertible selon l'une des revendications 1 à 8,
**caractérisé en ce qu'**
en position de repos, la poignée (1) peut passer de la position de repos à la position d'actionnement grâce à un déplacement de pression vertical, dirigé vers le haut.
